# EUROPEAN PATENT APPLICATION

(11) **EP 2 270 783 A2**
(43) Date of publication of application: **05.01.2011**
(21) Application number: 10012463.5
(22) Date of filing: 01.07.2003
(51) Int. Cl.: G11B 7/007, G11B 20/00, G11B 7/005

(54) **High-density optical disc and method for restricting playback of the high-density optical disc in optical disc apparatus**

(30) Priority: 02.07.2002 KR 20020037947; 10.09.2002 KR 20020054762
(62) Divisional of application: 03736356.1
(71) Applicant: LG Electronics Inc., Seoul 150-010 (KR)
(72) Inventor: Kim, Jin Yong, Seongnam Kyunggi-do 463-928 (KR); Suh, Sang Woon, Seoul 137-861 (KR)
(74) Representative: Diehl & Partner GbR

(57) **Abstract**

An apparatus for reproducing data from a recording medium, is disclosed, wherein the recording medium includes an information area including a lead-in area, a data area and a lead-out area. The apparatus comprises a pickup configured to read disc identification information identifying a type of the recording medium recorded in an area preceding the lead-in area and a controller configured to control the pickup to read disc control information data used to control data recording or reproduction to or from the data area. Data is recorded in the data area in a format unique to the type of the computer readable medium, and the type of recording medium is one of Read-Only, Recordable, and Rewritable types.

Furthermore, a method of reproducing data from a recording medium and a recording medium are disclosed.

## Description

### 1. Technical Field

The present invention relates to a high-density optical disc such as BD-ROM (Blu-ray Disc ROM) which has a function for preventing unauthorized duplication of data written therein, and a method for restricting playback of illegally duplicated optical discs.

### 2. Background Art

Recently, standardization of new high-density rewritable optical discs has rapidly progressed, for example, BD-RE (Blu-Ray Disc Rewritable) , which can store a large quantity of high-quality video and audio data. As a result, products associated with such discs have also been developed. Such products are expected to be commercially available in near future.

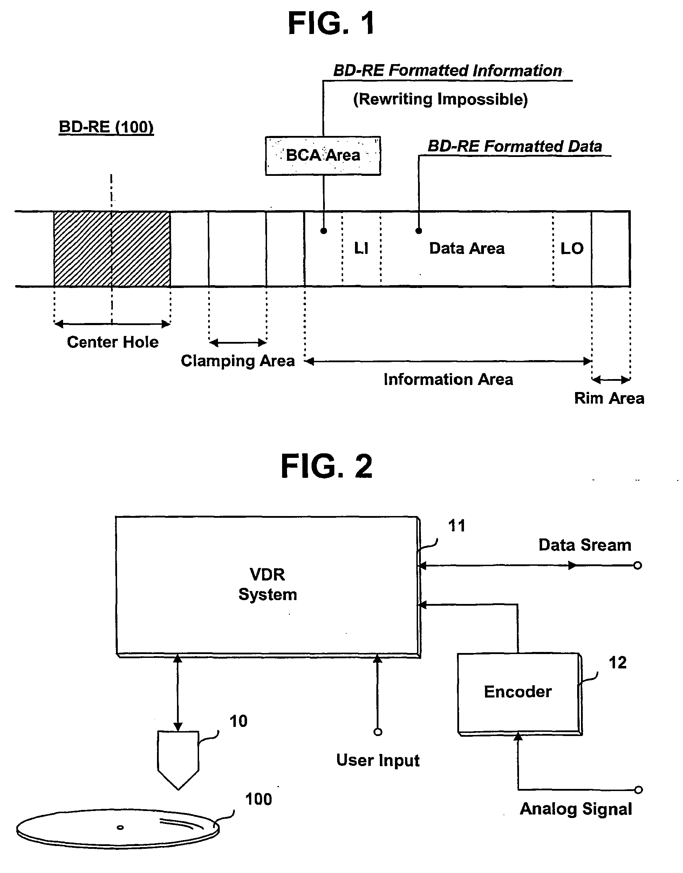

Referring to Fig. 1, the disc structure of a general BD-RE is shown. As shown in Fig. 1, the BD-RE has a center hole and a clamping area which are adapted to allow the optical disc to be loaded in position in an optical disc apparatus. The optical disc also has an information area for recording disc management information and data thereon.

A lead-in area (LI), a data area, and a lead-out area (LO) are assigned to the information area. And a burst cutting area (BCA) is assigned to the area preceding the lead-in area. The BCA, which is not a writable area, contains information modulated into a format unique to BD-RE.

Referring to Fig. 2, an example of an optical disc apparatus applicable to BD-RE is shown. As shown in Fig. 2, the optical disc apparatus includes an optical pickup 10, a video disc recorder (VDR) system 11, and an encoder 12. This optical disc apparatus performs a data recording operation for encoding and modulating data, externally inputted thereto, into a format unique to BD-RE, and then recording the modulated data on a data area assigned to the information area of the BD-RE. The optical disc apparatus also performs a data reproduction operation for reading out data streams recorded on the data area, and processing the read-out data streams to reproduce original video and audio data.

The optical disc apparatus having the above mentioned configuration can record A/V data of a movie or broadcasted program in a BD-RE 100, and subsequently reproduce the recorded A/V data from the BD-RE 100 in the form of high-quality video and audio.

Meanwhile, development and standardization of high-density read-only optical discs such as BD-ROM and write-once Blu-ray discs such as BD-R (Blu-ray Disc Recordable) have recently been progressed. However, there is no solution for effectively preventing unauthorized duplication of data streams, written on a BD-ROM, onto other optical discs such as BD-RE or BD-R. Accordingly, such a solution is strongly demanded.

### 3. Disclosure of Invention

The present invention has been made in view of the above-mentioned problems, and an object of the invention is to provide a high-density optical disc such as BD-ROM capable of preventing unauthorized duplication of data streams, written thereon, onto a BD-RE or BD-R, and a method for restricting playback of high-density optical discs duplicated illegally in an optical disc apparatus.

In accordance with one aspect, the present invention provides a high-density optical disc comprising: a center hole and a clamping area for allowing the optical disc to be loaded in position in an optical disc apparatus; and an information area for recording disc management information and data thereon; wherein a lead-in area, a data area, and a lead-out area are assigned to the information area, and wherein physical mark information is recorded in a selected one of a particular area assigned preceding the lead-in area, a particular region assigned to the lead-in area, and a particular region assigned to the lead-out area.

In accordance with another aspect, the present invention provides a method for restricting playback of an optical disc in an optical disc apparatus, comprising the steps of: detecting and identifying disc identification information additionally recorded, in the form of physical marks, on a particular area of an optical disc; and selectively restricting a data reproduction operation, based on the identified disc identification information and a format of data read out from the optical disc.

### 4. Brief Description of Drawings

The accompanying drawings, which are included to provide a further understanding of the invention, illustrate the preferred embodiments of the invention, and together with the description, serve to explain the principles of the present invention.
Fig. 1 is a diagram illustrating the disc structure of a general BD-RE;
Fig. 2 is a schematic block diagram illustrating the configuration of a general BD-RE recorder;
Fig. 3 is a diagram illustrating the disc structure of a BD-ROM according to the present invention;
Fig. 4 is a schematic view illustrating physical disc identification information recorded in the form of a wobbled pit pattern in accordance with the present invention;
Fig. 5 is a diagram illustrating the disc structure of a BD-R according to the present invention;
Fig. 6 is a schematic view illustrating physical disc identification information recorded in the form of aligned pit strings in accordance with the present invention;
Fig. 7 is a table for comparing data recording formats of BD-ROM, BD-RE, BD-R, and BD-R for authoring;
Fig. 8 is a schematic block diagram illustrating the configuration of an optical disc apparatus to which a playback restricting method according to the present invention is applied; and
Figs. 9a and 9b are flow charts illustrating sequential processes of the playback restricting method carried out in the optical disc apparatus in accordance with the present invention.

Features, elements, and aspects of the invention that are referenced by the same numerals in different figures represent the same, equivalent, or similar features, elements, or aspects in accordance with one or more embodiments.

### 5. Modes for Carrying out the Invention

Hereinafter, preferred embodiments of a high-density optical disc according to the present invention, and a method for restricting playback of the high-density optical disc in accordance with the present invention will be described in detail with reference to the annexed drawings.

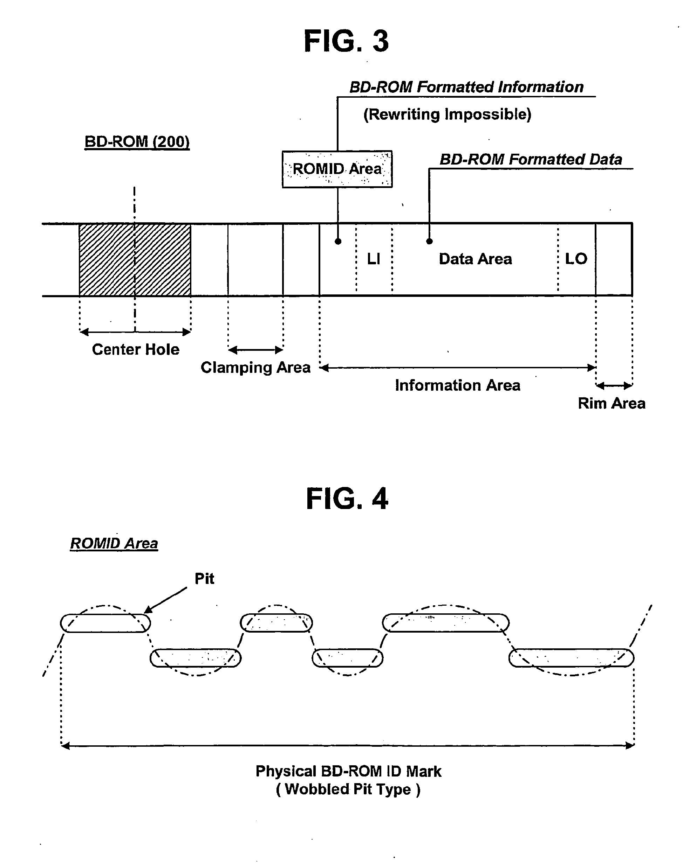

Referring to Fig. 3, the disc structure of a BD-ROM according to the present invention is shown. As shown in Fig. 3, the BD-ROM denoted by the reference numeral 200 has a center hole and a clamping area which are adapted to allow the BD-ROM 200 to be loaded in position in an optical disc apparatus. The BD-ROM 200 also has an information area on which disc management information and data have been recorded.

A lead-in area (LI), a data area, and a lead-out area (LO) are assigned to the information area. A disc identification area, for example, a 'BD-ROM identification (ROMID)' area, can be assigned to the area preceding the lead-in area. This ROMID area corresponds to the BCA of the BD-RE described with reference to Fig. 1. The ROMID area also can be assigned to a particular region of the lead-in or lead-out area.

The ROMID area, which is not a writable area, contains identification information representing the fact that the associated disc is of a BD-ROM type. This identification information can be recorded in a state of being modulated into a format unique to BD-ROM, that is, a physical BD-ROM ID mark.

As shown in Fig. 4, the physical BD-ROM ID mark can be recorded in the form of a wobbled pit pattern. This physical BD-ROM ID mark is detected at the initial stage of a servo operation, independent of a decoding operation for reproducing data. The wobbled pit pattern of the physical BD-ROM ID mark can represent an encryption key value used in encrypting the data to be written on the data area, that is, duplication preventing information.

On the other hand, data encoded and modulated into a format unique to BD-ROM is recorded on the data area assigned to the information area. This data is written in a mastering process in the manufacture of the associated disc.

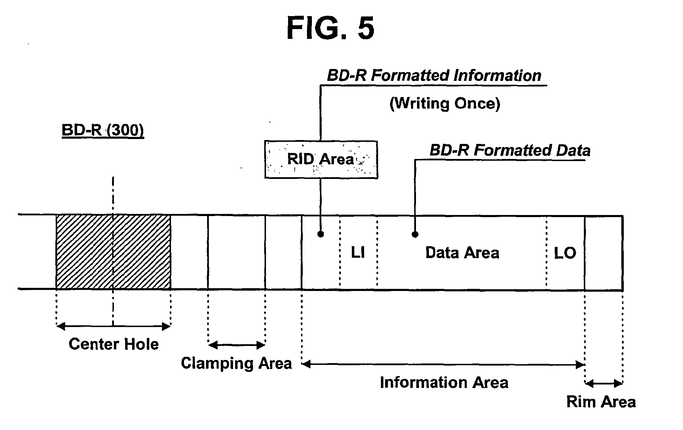

Fig. 5 illustrates the disc structure of a Blu-ray write-once, that is, BD-R, in accordance with the present invention. As shown in Fig. 5, this BD-R denoted by the reference numeral 300 has a center hole and a clamping area which are adapted to allow the BD-R 300 to be loaded in position in an optical disc apparatus. The BD-R 300 also has an information area for recording disc management information and data thereon.

A lead-in area (LI), a data area, and a lead-out area (LO) are assigned to the information area. A disc identification area, for example, a 'BD-R identification (RID)' area, also can be assigned to the area preceding the lead-in area. This RID area corresponds to the BCA of the BD-RE described with reference to Fig. 1.

The RID area, which is a writable area, contains identification information representing the fact that the associated disc is of a BD-R type. This identification information can be recorded in a state of being modulated into a format unique to BD-R, that is, a physical BD-R ID mark.

This physical mark can be recorded in the form of a wobbled pit pattern, as shown in Fig. 4. This physical BD-ROM ID mark is detected at the initial stage of a servo operation, independent of a decoding operation for reproducing data.

Meanwhile, the physical mark can be recorded in the form of a pit pattern other than the wobbled pit pattern. Using the physical mark having a pit pattern other than the wobbled pit pattern, it is possible to write data on the data area in an encrypted state, and to decrypt the encrypted data read out from the data area. This will be described in detail hereinafter.

Physical mark information, which is recorded on a particular recording area, for example, a lead-in area or a particular area (ROMID or RID area) preceding the lead-in area, in a BD-ROM or a BD-R authored for manufacture of BD-ROM, can be written to have a pattern of repeated mark/space pairs with respect to a monotone high-frequency-modulated (HFM) groove. Each mark/space pair consists of a mark and a space each having an optional length.

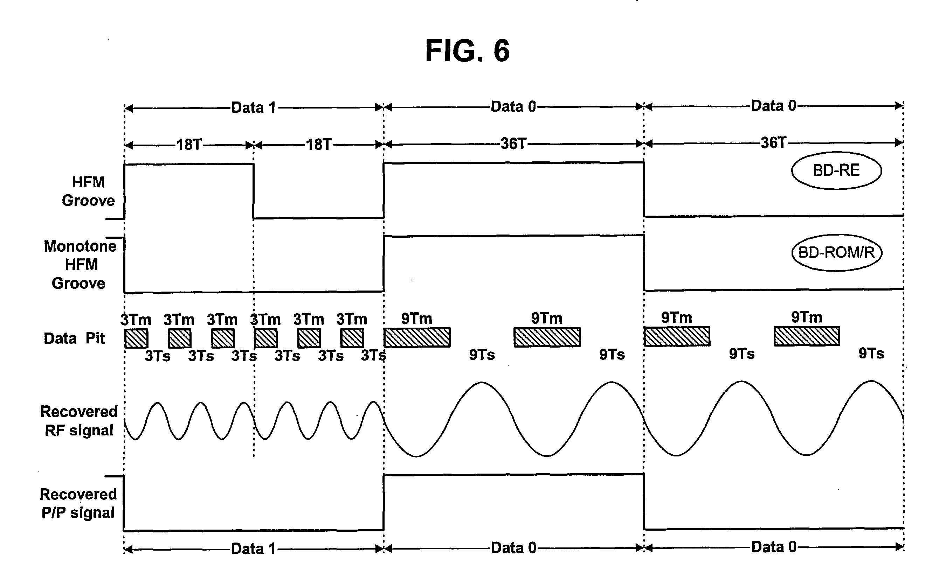

For instance, as shown in Fig. 6, the physical mark information is written with respect to a monotone HFM groove in which every recording field having a length of 36T always entirely has either a high level or a low level, irrespective of the data sequence value of the physical mark information. Where the data value of a 36T recording field is "1", a mark/space pair consisting of a mark having a length of 3T (3Tm) and a space having a length of 3T (3Ts) is repeatedly recorded 6 times in the 36T recording field to form a pattern of 6 mark/space pairs aligned with one another. On the other hand, where the data value of the 36T recording field is "0", a mark/space pair consisting of a mark having a length of 9T (9Tm) and a space having a length of 9T (9Ts) is repeatedly recorded 2 times in the 36T recording field to form a pattern of 2 mark/space pairs aligned with one another.

Meanwhile, in the latter case, that is, where the data value of the 36T recording field is "0", a mark having a length of 12T (12Tm), a space having a length of 12T (12Ts), and a mark having a length of 12T (12Tm) are sequentially recorded in the 36T recording field. In this case, however, there is a strong possibility of errors occurring during a tracking servo operation, because the frequencies of RF and push-pull signals get relatively lowered due to the 12T length of the marks and space. Therefore, it is preferable to record repeated mark/space pairs each consisting of a mark of 9T (9Tm) and a space of 9T (9Ts) which are capable of maintaining respective RF and push-pull signals at appropriate frequencies.

Where physical mark information is recorded to have a wobbled pit pattern, as described above with reference to Fig. 4, its wobbled pits can be formed using mastering equipment adapted to manufacture BD-ROMs. However, such wobbled pits cannot be recorded in general disc drivers, for example, BD-R drivers, because their wobbling frequency is beyond the driving frequency band of an actuator used in those BD-R drivers. As a result, it is impossible to duplicate BD-ROMs, using BD-R drivers.

In other words, in a BD-R authored for manufacture of BD-ROM, that is, a BD-R for authoring, it is possible not only to record physical mark information, but also to record essential disc information (DI) to be permanently recorded and maintained in a permanent information & control (PIC) data region included in the lead-in area of the BD-R, by applying a recording scheme in which repeated mark/space pairs each consisting of a mark and a space each having an optional length are recorded such that they are aligned with one another, with respect to a monotone HFM groove. On the other hand, recording of data in the writable area of the BD-R is achieved with respect to each typical wobbled groove.

Meanwhile, in the case of BD-ROM, wobbled pits or normal pits can be recorded in the PIC region of the BD-ROM, whereas data having the form of general pit strings is recorded in the data recording area of the BD-ROM. Accordingly, optical disc apparatuses can more easily determine the type of any optical disc, for example, BD-RE or general BD-R, by referring to pit string recorded in the form of a unique pattern in the PIC region of the optical disc.

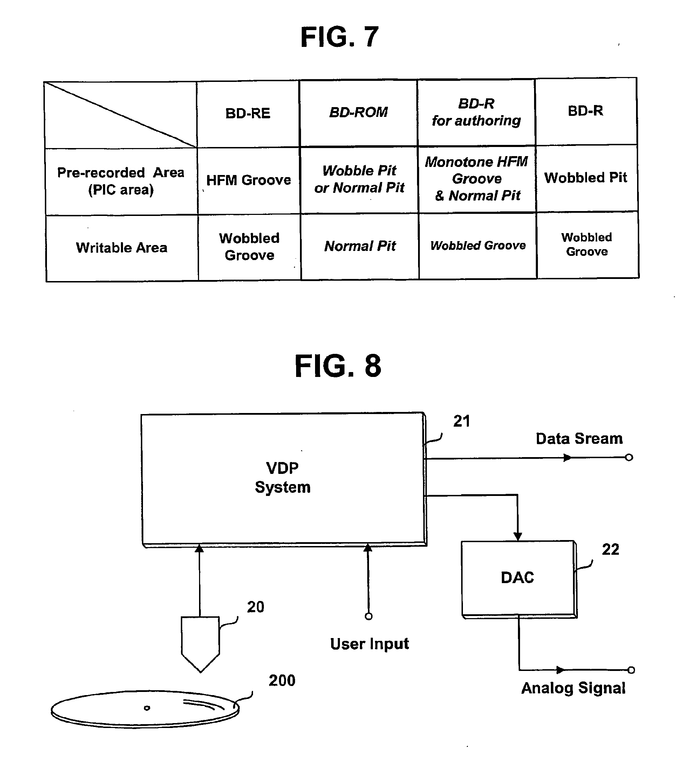

Accordingly, in the case of an optical disc apparatus adapted to play back a BD-ROM or BD-R recorded with the above described physical mark information, for example, a BD-ROM player including an optical pickup 20, a VDP system 21, and a D/A converter 22, as shown in Fig. 8, it detects and identifies the physical mark information at the initial stage of a typical servo operation thereof carried out when an optical disc is loaded, detects and identifies the unique format of data read out from the data area of the optical disc during a data reproduction operation thereof, thereby determining whether or not the data was illegally duplicated on the optical disc, so as to perform a playback restricting operation for forcibly stopping the playback of the optical disc in accordance with the result of the determination. These operations will be described in detail hereinafter.

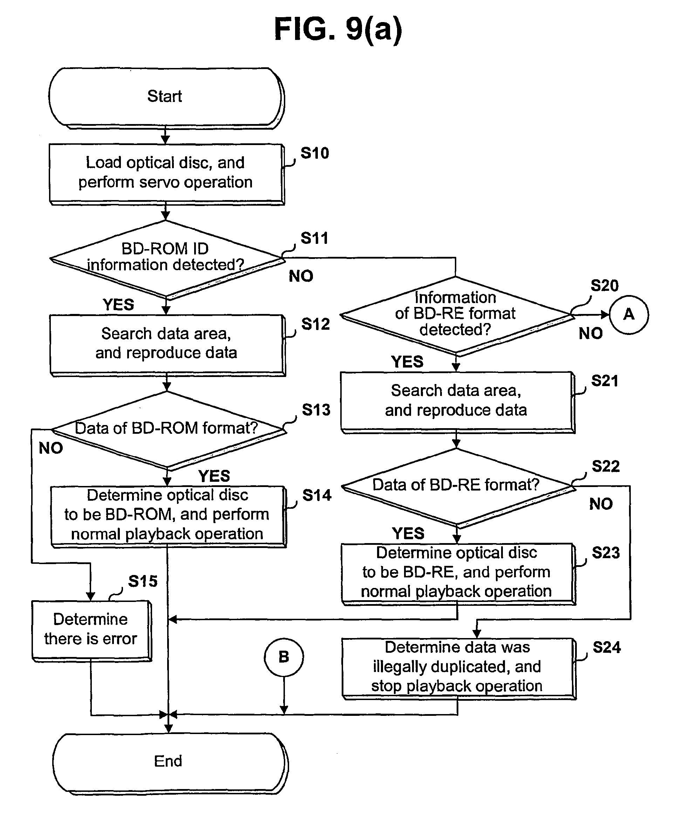

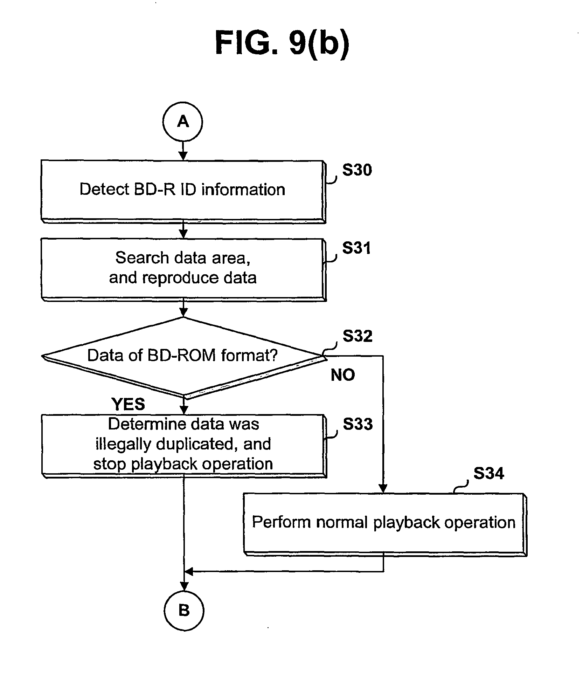

Figs. 9a and 9b are flow charts illustrating sequential processes of a method for restricting playback of an optical disc in an optical disc apparatus in accordance with the present invention.

In the optical disc apparatus shown in Fig. 8, a typical focusing and tracking servo operation is carried out by the VDP system 21 when an optical disc is loaded in the optical disc apparatus (S10), as shown in Fig. 9a.

At the initial stage of the servo operation, the VDP system 21 accesses a disc identification area preceding a lead-in area of the optical disc, to detect and identify physical mark information recorded in the disc identification area. For example, where it is determined that the physical mark information corresponds to ID information associated with BD-ROM (S11), the VDP system 21 determines that the loaded optical disc is a BD-ROM,

Subsequently, the VDP system 21 searches a data area assigned to an information area of the optical disc, and performs a data reproduction operation for reading out data recorded in the data area, and reproducing the read-out data (S12). Where the data read out in the above described procedure has a format unique to BD-ROM, that is, the read-out data is BD-ROM format data (S13), the VDP system 21 determines the loaded disc to be a normal BD-ROM, and continues the data reproduction (playback) operation (S14).

On the other hand, where the read-out data does not have the format unique to BD-ROM, that is, it is not BD-ROM format data, the VDP system 21 determines that there is an error in determining the kind of the optical disc (S15). In this case, the VDP system 21 stops the data reproduction (playback) operation or performs the disc determining operation again.

Meanwhile, where the physical mark information recorded in the disc identification area does not correspond to BD-ROM ID information, for example, where information recorded in accordance with a format unique to BD-RE is detected (S20), the VDP system determines the loaded optical disc to be BD-RE.

Thereafter, the VDP system 21 searches the data area assigned to the information area, and then performs a data reproduction operation for reading out data recorded in the data area, and reproducing the read-out data (S21). Where the data read out in this procedure has a format unique to BD-RE, that is, the read-out data is BD-RE format data (S22), the VDP system 21 determines the loaded optical disc to be a normal BD-RE, and continues the data reproduction (playback) operation (S23).

On the other hand, where the read-out data does not have the format unique to BD-RE, for example, where it is BD-ROM format data other than BD-RE format data, the VDP system 21 determines that BD-ROM data was illegally duplicated on a BD-RE, and then informs of this fact by displaying a report message, while performing a playback restricting operation to forcibly stop the data reproduction operation (S24).

Also, where BD-R ID information is detected from the physical mark information recorded in the disc identification area (S30), the VDP system 21 determines the loaded optical disc to be BD-R. In this case, the VDP system 21 searches the data area assigned to the information area, and then performs a data reproduction operation for reading out data recorded in the data area, and reproducing the read-out data (S31).

Where it is subsequently determined that the data read out in this procedure has a format unique to BD-ROM, that is, the read-out data is BD-ROM format data (S32), the VDP system 21 determines that BD-ROM data was illegally duplicated on a BD-R, and then informs of this fact by displaying a report message, while performing a playback restricting operation to forcibly stop the data reproduction operation (S33).

On the other hand, where the read-out data does not have the format unique to BD-ROM, for example, where it is BD-RE format data or BD-R format data, the VDP system 21 determines that the loaded optical disc is a normal BD-R, and continues the data reproduction operation (S34).

For reference, where although BD-ROM format data is recorded in the data area of a BD-R disc, separate copyright allowance information is additionally recorded, a normal data reproduction operation can be carried out in accordance with a determination that duplication of data was authorized, based on the copyright allowance information.

As apparent from the above description, the present invention provides a high-density optical disc such as BD-ROM capable of efficiently preventing unauthorized duplication of data streams, written thereon, onto a BD-RE or BD-R, and a method for restricting playback of high-density optical discs duplicated illegally in an optical disc apparatus.

Although the preferred embodiments of the invention have been disclosed for illustrative purposes, those skilled in the art will appreciate that various modifications, additions and substitutions are possible, without departing from the scope and spirit of the invention as disclosed in the accompanying claims.

The subject matter described in the following paragraphs that are numbered for allowing reference is part of the disclosure of the present application, each of which can be claimed in the present application, and in one or more future divisional applications therefrom:
(1) A high-density optical disc comprising: a center hole and a clamping area for allowing the optical disc to be loaded in position in an optical disc apparatus; and an information area for recording disc management information and data thereon; wherein a lead-in area, a data area, and a lead-out area are assigned to the information area, and wherein physical mark information is recorded in a selected one of a particular area assigned preceding the lead-in area, a particular region assigned to the lead-in area, and a particular region assigned to the lead-out area.
(2) The high-density optical disc according to paragraph (1), wherein the physical mark information is recorded to have a wobbled pattern of pits representing duplication preventing information.
(3) The high-density optical disc according to paragraph (1), wherein the physical mark information is recorded to have a pattern of repeated mark/space pairs with respect to a monotone high-frequency-modulated groove, each mark/space pair consisting of a mark and a space each having an optional length.
(4) The high-density optical disc according to paragraph (3), wherein the marks and spaces of the mark/space pairs are aligned with one another in each recording field of the monotone high-frequency-modulated groove.
(5) The high-density optical disc according to paragraph (4), wherein the length of the marks and spaces of each recording field is determined to be a different length in accordance with a data value associated with the recording field.
(6) The high-density optical disc according to paragraph (4), wherein each of the marks and spaces in a recording field has a length of 3T when data value associated with the recording field has a value of "1", while having a length of 9T when the associated data value has a value of "0", and wherein the recording field has a length of 32T.
(7) The high-density optical disc according to paragraph (4), wherein the optical disc is a Blu-ray disc ROM (BD-ROM) or a write-once Blu-ray disc (BD-R) authored for manufacture of BD-ROMs.
(8) The high-density optical disc according to paragraph (1), wherein the physical mark information is detected at an initial stage of a servo operation carried out in the optical disc apparatus, separately from a decoding operation to be carried out in the optical disc apparatus.
(9) The high-density optical disc according to paragraph (1), wherein the physical mark information is identification information unique to a Blu-ray disc ROM (BD-ROM).
(10) The high-density optical disc according to paragraph (9), wherein the particular area preceding the lead-in area is an area where writing of data is impossible after manufacture of the optical disc.
(11) The high-density optical disc according to paragraph (1), wherein the physical mark information is identification information unique to a write-once Blu-ray disc recordable (BD-R).
(12) The high-density optical disc according to paragraph (11), wherein the particular area preceding the lead-in area is a write-once area where writing of data is possible only one time after manufacture of the optical disc.
(13) A method for restricting playback of an optical disc in an optical disc apparatus, comprising the steps of:
   (A) detecting and identifying disc identification information additionally recorded, in the form of physical marks, on a particular area of an optical disc; and (B) selectively restricting a data reproduction operation, based on the identified disc identification information and a format of data read out from the optical disc.
(14) The method according to paragraph (13), wherein the step (A) comprises the step of detecting and identifying disc identification information additionally recorded, in the form of physical marks, on a particular area preceding a lead-in area assigned to the optical disc, at an initial stage of a servo operation carried out by the optical disc apparatus.
(15) The method according to paragraph (13), wherein the step (B) comprises the steps of carrying out a normal playback operation when both the identified disc identification information and the format of the read-out data are unique to a Blu-ray disc ROM (BD-ROM).
(16) The method according to paragraph (13), wherein the step (B) comprises the steps of determining that the read-out data was illegally duplicated when the identified disc identification information is not unique to a Blu-ray disc ROM (BD-ROM) whereas the format of the read-out data is unique to the BD-ROM, and stopping a playback operation.

## Claims

1. An apparatus for reproducing data from a recording medium, wherein the recording medium includes an information area including a lead-in area, a data area and a lead-out area, comprising:
a pickup configured to read disc identification information identifying a type of the recording medium recorded in an area preceding the lead-in area; and
a controller configured to control the pickup to read disc control information data used to control data recording or reproduction to or from the data area, wherein data is recorded in the data area in a format unique to the type of the computer readable medium, and the type of recording medium is one of Read-Only, Recordable, and Rewritable types.

2. The apparatus of claim 1, wherein the controller is configured to control the optical pickup to detect the disc control information from the lead-in area of the recording medium.

3. The apparatus of claim 1, wherein the controller is configured to control the pickup to read the disc identification information during an initial stage of a servo operation and to control the reproduction of the data recorded in the data area by utilizing the disc identification information.

4. The apparatus of claim 1, wherein the controller is configured to selectively restrict reproduction of the data, based on the disc identification information and the format of the data.

5. The apparatus of claim 1, wherein the controller is configured to control the pickup to read the disc identification information from BCA (Burst Cutting Area) and the disc control information from a permanent information & control data (PIC) area of a Blu-ray Disc Read-Only (BD-RO) disc where writing of data is impossible after manufacture of the recording medium.

6. A method of reproducing data from a recording medium including an information area including a lead-in area, a data area and a lead-out area, comprising:
reading disc identification information identifying a type of the recording medium and recorded in an area preceding the lead-in area, wherein the type of recording medium is one of Read-Only, Recordable, and Rewritable types, and reading disc control information used to control data recording or reproduction to or from the data area; and
reproducing data recorded in the data area in a format unique to the type of the recording medium.

7. The method of claim 6, wherein the reading step detects the disc control information from the lead-in area of the recording medium.

8. The method of claim 6, wherein the reading step reads the disc identification information during an initial stage of a servo operation and the reproducing step controls the reproduction of the data recorded in the data area by utilizing the disc identification information.

9. The method of claim 6, wherein the reproducing step selectively restricts reproduction of the data, based on the disc identification information and the format of the data.

10. The method of reproducing data according to claim 1, wherein the reading step reads the disc identification information from BCA (Burst Cutting Area) and the disc control information from a permanent information & control data (PIC) area of a Blu-ray Disc Read-Only (BD-RO) disc where writing of data is impossible after manufacture of the recording medium.

11. A recording medium including an information area including a lead-in area, a data area and a lead-out area, comprising:
disc identification information identifying the type of the recording medium and recorded in an area preceding the lead-in area, wherein the type of the computer readable medium is one of Read-Only, Recordable, and Rewritable types; and
disc control information used to control data recording or reproduction to or from the data area, wherein data is recorded in the data area in a format unique to the type of the recording medium.

12. The recording medium of claim 1, wherein the disc control information is recorded in the lead-in area of the recording medium.

13. The recording medium of claim 11, wherein the disc identification information is recorded in BCA (Burst Cutting Area).

14. The recording medium of claim 11, wherein the disc control information is recorded in a permanent information & control data (PIC) area of a Blu-ray Disc Read-Only (BD-RO) disc where writing of data is impossible after manufacture of the recording medium.

15. The recording medium of claim 11, wherein the disc identification information has been recorded as a format unique to Blu-ray disc.
